# EUROPEAN PATENT SPECIFICATION

(11) **EP 4 500 563 B1**
(45) Date of publication and mention of the grant of the patent: **15.07.2026**
(21) Application number: 23714697.2
(22) Date of filing: 24.03.2023
(51) Int. Cl.: H01F 38/14, B60L 53/12, H01F 27/08, H01F 27/40, H02J 50/10

(54) **POWER TRANSFORMER ASSEMBLY**
LEISTUNGSTRANSFORMATORANORDNUNG
ENSEMBLE TRANSFORMATEUR DE PUISSANCE

(30) Priority: 26.03.2022 CH 3382022
(43) Date of publication of application: 05.02.2025
(73) Proprietor: BRUSA Elektronik AG, 9470 Buchs (CH)
(72) Inventor: PFÄTTISCH, Veit, 9470 Buchs (CH); ZEGULA, Konrad, 81829 München (DE); IVANCIC, Nikola, 9470 Buchs (CH)
(74) Representative: Frei Patent Attorneys
(86) International application number: PCT/EP2023/057629
(87) International publication number: WO 2023/186728

(56) References cited:
- DE-A1- 102020 209 282
- US-A1- 2019 035 547
- US-A1- 2020 411 235

## Description

### FIELD OF THE INVENTION

The present invention relates to a power transformer assembly for transforming electromagnetic power of an oscillating electromagnetic field into electric power of an electric current or available electric current for charging an electric storage device or energizing an electric load. The power transformer assembly comprises a magnetic assembly for receiving the oscillating electromagnetic field and transforming it into an electric alternating current, and an electronic assembly for receiving the electric alternating current and transforming it into the electric current or available electric current. The power transformer assembly further comprises heat dissipation means for dissipating heat generated by the electronic assembly during their respective power transforming operation.

The power transformer assembly, also referred to as a wireless charger module, may be used for charging a high-voltage (HV) battery of a vehicle. Such a module, sometimes also referred to as car-pad module (CPM), can receive an oscillating magnetic field from an external transmitter, which is sometimes referred to as ground-pad module (GPM), and transform the oscillating electromagnetic, predominantly magnetic field, into an alternating current which is converted (typically rectified) into an electric current (typically a direct current) used for charging the HV battery.

### BACKGROUND OF THE INVENTION

Batteries of electric vehicles can be charged using alternating current (AC) or direct current (DC) energy transfer. DC energy transfer is typically provided using high-power converters which are placed at dedicated charging points. While DC charging is typically faster than AC charging, it is not convenient for the end user as DC charging points are typically placed in remote areas and not installed in houses or residential areas as the installation of a DC charging point is expensive and the preexisting network capacity in those areas is usually vulnerable.

AC charging on the other hand is very important for residential areas and (semi)public urban areas. Typical AC chargers are capable of providing a charging power of up to 22 kW. AC charging systems can be divided into wired charging systems and wireless charging systems, wherein wireless charging systems are mainly embodied as inductive charging systems (ICSs). Wired AC chargers are typically integrated in electric vehicles, and are also referred to as on-board chargers. An ICS typically comprises two separate modules which are often referred to as ground-pad module (GPM) and car-pad module (CPM).

The GPM is installed outside the electric vehicle while the CPM is installed inside the electric vehicle, usually on the bottom side of the vehicle. Electromagnetic interaction between the GPM and the CPM enables energy transfer from the GPM to the CPM, and the CPM is in turn used for charging a battery of the electric vehicle. Wireless charging systems are often more convenient for a user as typically no manual intervention is required for starting the charging process of the battery other than parking the vehicle above the GPM. Wired charging systems on the other hand require the user to connect the electric vehicle to a utility grid via a cable.

The term "GPM" as used herein is to be understood as an equivalent to the term "wireless charging supplier" or simply "supplier" as used herein. The term "CPM" as used herein is to be understood as an equivalent to the term "wireless charger" or simply "charger" as used herein. Also, in the present text, the terms "power transformer assembly" and "wireless charger" or "wireless charger module" are used interchangeably.

When it comes to cooling, it is important to understand that a CPM has two regions of heat generation: (a) the electronic assembly (power electronics) generating a lot of heat, but relatively concentrated at specific locations (high density), and (b) the magnetic assembly (coil and ferrite) generating less and relatively well distributed heat (low density). Prior art cooling systems for such CPMs are not well tailored to these circumstances and are relatively difficult to manufacture and thus expensive.
US 2019/035547 A1 discloses a coil unit for a wireless power transmission system. It includes a spiral coil, a capacitor and a magnetic member covering the coil in an axial direction, a first metal shield covering the coil with the magnetic member interposed therebetween, and a second metal shield disposed between the magnetic member and the first metal shield, forming a space for housing the capacitor. The second metal shield is thermally connected to the first metal shield.
DE 10 2020 209282 A1 discloses an induction assembly with a coil carrier and winding, and a heat exchanger. A core assembly may form a coil with the coil winding. The core assembly includes two core bodies spaced apart from one another. A heat exchanger includes an inner panel spaced apart from the core assembly and an outer wall located opposite the inner panel. The outer wall limits a flow space through which a flow path of a cooling fluid for controlling a temperature of the induction assembly leads.
US 2020/411235 A1 discloses a method for producing an inductive charging device, comprising inserting a ferrite and a coil, wound from a braid, into a mould; and encasing the ferrite and the braid with a plastic in a low pressure casting method, a pressing transfer moulding method, or an injection moulding method.

### OBJECT OF THE INVENTION

Therefore, it is an object of the invention to provide a power transformer assembly which meets the overall cooling requirements and in particular the electronic assembly cooling requirements and which can be manufactured easily and at relatively low cost.

### SUMMARY OF THE INVENTION

This object is achieved by a power transformer assembly for transforming electromagnetic power of an oscillating electromagnetic field into electric power of an electric current for charging an electric storage device or energizing an electric load, the power transformer assembly comprising:
a magnetic assembly for receiving the oscillating electromagnetic field and transforming it into an electric alternating current;
an electronic assembly for receiving the electric alternating current and
transforming it into the electric current, wherein
the power transformer assembly comprises heat dissipation means for dissipating heat generated by the magnetic assembly and by the electronic assembly during their respective power transforming operation, wherein:
   a) the heat dissipation means is arranged between the magnetic assembly and the electronic assembly and in thermal contact with the magnetic assembly and the electronic assembly;
   b) the heat dissipation means comprises:
      a first part in thermal contact with the magnetic assembly and
      a second part in thermal contact with the electronic assembly;
   c) the first part comprises a first material and has a first structure adapted to dissipate heat flow from the magnetic assembly;
   d) the second part comprises a second material different from the first material and has a second structure different from the first structure adapted to dissipate heat flow from the electronic assembly, and wherein the second material of the second part is a metal or a metal alloy and the first material of the first part is a polymer or a polymer blend and the first part comprises a portion defining ducts for a heat transfer fluid.

As a result, the first part in thermal contact with the magnetic assembly and comprising a first material and/or first structure adapted to dissipate heat flow from the magnetic assembly provides a first portion of overall heat dissipation from the power transformer assembly. Similarly, the second part in thermal contact with the electronic assembly and comprising a second material different from the first material and/or having a second structure different from the first structure adapted to dissipate heat flow from the electronic assembly provides a second portion of overall heat dissipation from the power transformer assembly.
In other words, with the magnetic assembly being a first type of heat source and the electronic assembly being a second type of heat source in the power transformer assembly, the invention enables heat source specific heat dissipation by providing the first part as a first type of heat sink and the second part as a second type of heat sink. By allowing the material and/or structure of the first part (first type of heat sink) and of the second part (second type of heat sink) to be different from each other, each of the first and second parts needs to meet the heat dissipation requirements of the magnetic assembly (first type of heat source) and the electronic assembly (second type of heat source), respectively. Therefore, the first part can be provided with a first material and first structure primarily meeting the heat dissipation requirements of the magnetic assembly only, and the second part can be provided with a second material and second structure primarily meeting the heat dissipation requirements of the electronic assembly only. Thus, the specific heat dissipation requirements for each of the first and second parts can be minimalistic which allows significant savings to be achieved. For instance, savings can be achieved by selecting a material with low thermal conductivity, and the low thermal conductivity may be compensated by providing this material with a special structure which lends itself to improving heat flow.
The invention further facilitates more design flexibility for the power transformer and a reduction of involved parts.

Preferably, the first part comprises a first material having a first thermal conductivity and the second part comprises a second material having a second thermal conductivity, said second thermal conductivity being greater than said first thermal conductivity.

Preferably, a thermal conductivity of the second material is greater than 100 W/(m·K). This guarantees sufficient heat flow from the electronic assembly as a heat source with concentrated hot spots and relatively high temperatures.

Since the first part comprises a portion defining ducts for a heat transfer fluid (coolant), this allows the first part to be arranged in fluid connection with a coolant circuit, with the ducts of the first part preferably being a portion of the coolant circuit.

Preferably, the first part with said duct-defining portion is made by forming (shaping) a material in a mold. This allows the cost of manufacturing to be reduced.

The first part with said duct-defining portion may be made by molding (casting, injecting) a moldable material in said mold.

The first part with said duct-defining portion may be made by sintering a sinterable material within said mold.

The first part with said duct-defining portion may be made by cross-linking a cross-linkable material within said mold.

Preferably, the first part with said duct-defining portion is made additively in a layer-by-layer fashion. This allows complicated geometries for the first part to be manufactured which lend themselves to efficient heat transfer from the magnetic assembly (coil, ferrite), as a more evenly distributed heat source, to the first part as heat sink with a heat transfer fluid (coolant) flowing through he ducts.

Since the first material of the first part is a polymer or a polymer blend, this allows the first part with its duct geometries to be manufactured by low-cost molding.

The first part may comprise a polymer matrix having particles dispersed therein, said particles being selected from the group comprising metal particles and graphite particles. These particles increase the polymer's electric conductivity.

Preferably, the second part comprises a solid metal material. This guarantees sufficient heat flow from the electronic assembly as a heat source with concentrated hot spots and relatively high temperatures. In addition, it provides extra mechanical strength to the overall dissipation means.

Preferably, the second part comprises a porous metal material. This allows the amount of required metal material to be reduced without any significant reduction in thermal conductivity and mechanical strength of the second part. Thus, weight and material cost can be reduced with respect to the solid metal material.

In a preferred embodiment, the second part comprises a metal layer. This metal layer contributes to homogenizing the local temperature peaks / hot spots of the electronic assembly by heat flow in the lateral direction along the metal layer.

Preferably, the magnetic assembly comprises a coil.

Preferably, the magnetic assembly comprises a material adjacent to the coil, said material having a permeability greater than or equal to 1.

Preferably, the material adjacent to the coil is a ferrite.

Preferably, the electronic assembly comprises a power electronics part.

Preferably, the heat dissipation means comprises a third part arranged between the first part and the magnetic assembly. As mentioned before, the first part can be provided with a first material and first structure primarily meeting the heat dissipation requirements of the magnetic assembly only, and the second part can be provided with a second material and second structure primarily meeting the heat dissipation requirements of the electronic assembly only. With the third part, the overall heat dissipation properties provided by the first and second parts can be further modified. In addition, each of the three parts can be provided with its own material and geometry.
Therefore, the overall heat dissipation means of the power transformer assembly or wireless charger according to the invention can be assembled in a modular manner with two or three heat dissipation parts to obtain specific heat dissipation and mechanical properties of the overall heat dissipation means.

Preferably, the third part comprises a solid metal material. This guarantees sufficient heat flow from the magnetic assembly. Again, it provides extra mechanical strength to the overall dissipation means.

Preferably, the third part comprises a porous metal material. Again, this allows the amount of required metal material to be reduced without any significant reduction in thermal conductivity and mechanical strength of the third part. Thus, weight and material cost can be reduced with respect to the solid metal material.

Preferably, the third part comprises a metal layer. Again, this metal layer contributes to homogenizing any local temperature non-uniformities of the magnetic assembly by heat flow in the lateral direction along the metal layer.

Preferably, a three-part sandwich arrangement composed of the first part, the second part and the third part is arranged between the magnetic assembly and the electronic assembly and in thermal contact with each of them. The three-part sandwich arrangement composed of the first, second and third parts defined above lends itself to improving the mechanical strength of this sandwich-type overall heat dissipation means. Preferably, this sandwich structure is arranged between the magnetic assembly (first heat source) and the electronic assembly (second heat source) and in thermal contact with each of them. Preferably, the second part and the third part have a higher mechanical strength than the first part in between the two of them. This provides the overall heat dissipation means with high bending stiffness. Preferably, the second and third parts are made from a solid or porous metal layer while the first part in between may be made from a polymer. The first part may be a web structure, preferably a perforated honeycomb structure, permitting coolant flow while providing high bending stiffness with little weight.

Preferably, the ducts for the heat transfer fluid defined by the material of the first part comprise a plurality of flow obstacles extending across the ducts.

At least some of the flow obstacles may be formed integrally with the first part.

At least some of the flow obstacles may be formed integrally with the second part.

At least some of the flow obstacles may be formed integrally with the third part.

Preferably, the first part comprises functional portions formed integrally with the duct-defining material of the first part.

These functional portions may comprise at least one of a heat transfer fluid (coolant) inlet, a heat transfer fluid (coolant) outlet, a snorkel (breathing element) and interface formations.

For instance, the invention relates to a wireless charger for charging a high-voltage (HV) battery of a vehicle, comprising a coil configured for wirelessly receiving an oscillating magnetic field from an external transmitter, thereby creating an alternating current, a ferrite arranged adjacent to the coil, cooling channels arranged adjacent to at least one of the ferrite and the coil, the cooling channels configured for providing a flow of coolant, electric components configured for charging the HV battery based on the AC, a metal cover separating the coil and the ferrite from the electric components, at least one of the electric components being arranged adjacent to the metal cover, wherein the wireless charger further comprises an electrically non-conductive part configured for forming the cooling channels at least in part and separating the coil and the ferrite from the metal cover.

In some embodiments, the cooling channels are formed at least in part by recesses machined or formed into the electrically non-conductive part.

In some embodiments, the cooling channels are formed by the metal cover closing the recesses by abutting the electrically non-conductive part.

In some embodiments, the wireless charger further comprises a plate, wherein the cooling channels are formed by the plate closing the recesses by abutting the electrically non-conductive part, the plate separating the electrically non-conductive part from the metal cover.

In some embodiments, the cooling channels are incorporated into the electrically non-conductive part.

In some embodiments, the metal cover is at least a part of a housing of the HV battery.

In some embodiments, the metal cover comprises structure for enlarging the heat sink, the structure dipping into the cooling channels.

In some embodiments, the wireless charger further comprises a coolant inlet and a coolant outlet, both coolant inlet and coolant outlet being machined or formed into the electrically non-conductive part.

In some embodiments, the metal cover is glued onto the non-conductive part.

In some embodiments, the metal cover is flat at least in an area adjacent to the non-conductive part.

In some embodiments, the non-conductive part is made of plastic.

In some embodiments, coil and ferrite are combined in one potting.

In some embodiments, the wireless charger further comprises a coil cover made of plastic, said potting embedded in the coil cover, said coil cover configured to be joined with the non-conductive part.

In some embodiments, the wireless charger further comprises sealing lips bordering or encompassing the cooling channels.

In some embodiments, the metal cover is made of aluminium and configured for shielding the vehicle from the oscillating magnetic field.

### BRIEF DESCRIPTION OF THE DRAWINGS

By way of example only, preferred embodiments of the invention will be described more fully hereinafter with reference to the accompanying figures, wherein:
**Fig. 1** shows in a top view a garage, where a vehicle is parking over a wireless charging supplier that is external to the vehicle and has a transmitter for transmitting an oscillating magnetic field;
**Fig. 2** shows a zoom into figure 1 and shows the wireless charging supplier and a wireless charger for charging a high-voltage (HV) battery of the vehicle;
**Fig. 3** shows the charger from figure 2 in a close-up 3D view;
**Fig. 4** shows a cross-section of a charger according to the prior art;
**Fig. 5** shows an exemplary embodiment (first embodiment) of the inventive charger;
**Fig. 6** schematically shows a further embodiment (second embodiment) with the metal cover being "donated" by the housing of the HV battery;
**Fig. 7** shows an exemplary embodiment (third embodiment) of a wireless charger comprising a coolant inlet and a coolant outlet both machined or formed into the electrically non-conductive part;
**Figs. 8A and 8B** schematically show another embodiment (fourth embodiment) as a cross-section and a perspective view, respectively; and
**Figs. 9A and 9B** schematically show a further embodiment (fifth embodiment) as a cross-section and a perspective view, respectively.

### DETAILED DESCRIPTION OF THE DRAWINGS

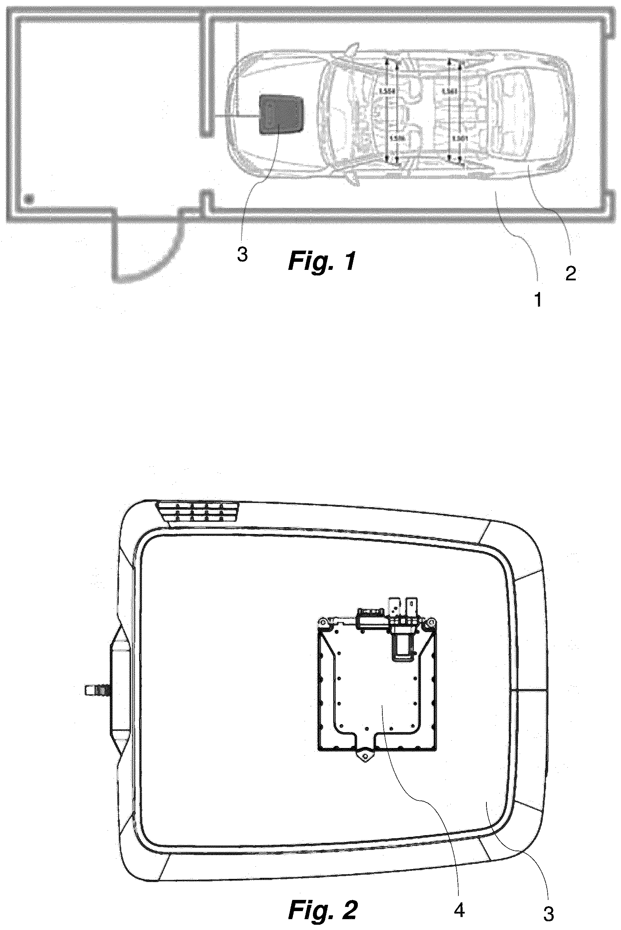

**Fig. 1** shows in a top view a garage 1, where a vehicle 2 is parking over a wireless charging supplier 3 that is external to the vehicle 2 and has a transmitter for transmitting an oscillating magnetic field. The supplier 3 can be seen as the vehicle 2 is depicted as being transparent. Such a charging solution is very convenient and saves the driver the plugging and unplugging of a charging cable.

**Fig. 2** is a zoom into **Fig. 1** and shows the wireless charging supplier 3 and furthermore, "floating" over the supplier 3, a wireless charger 4 for charging a high-voltage (HV) battery of the vehicle 2. Said charger 4 is built into the vehicle, which means that, in this view, the rest of the vehicle is hidden.

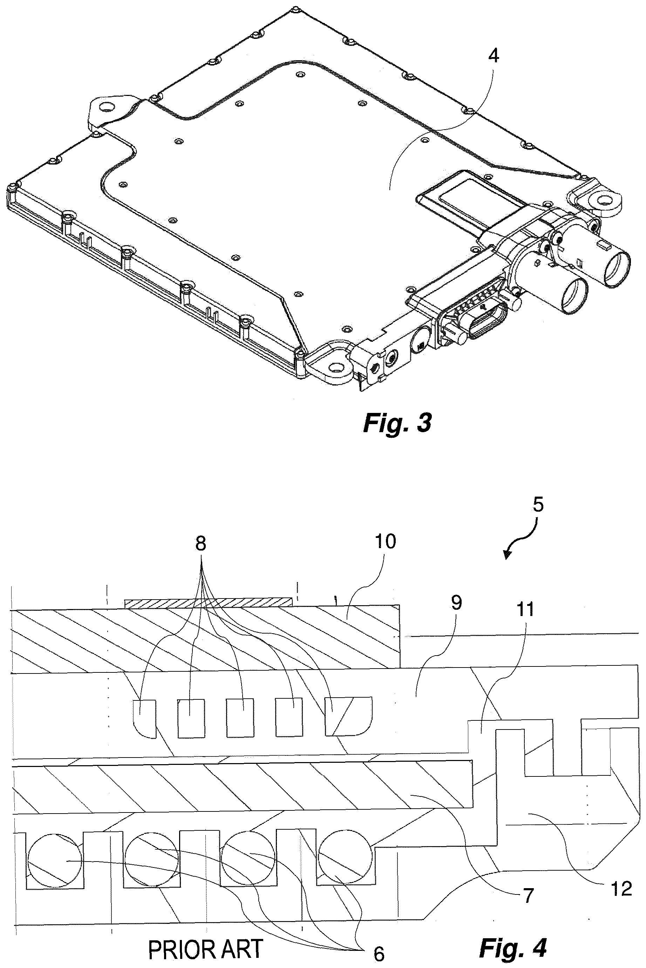

**Fig. 3** shows the charger 4 in a close-up 3D view.

**Fig. 4** shows a cross-section of a charger 5 according to the prior art. The charger 5 has a coil 6 configured for wirelessly receiving said oscillating magnetic field from the external transmitter included in the wireless charging supplier 3. The oscillating fields induce an alternating current (AC) in the coil. A ferrite 7 is arranged adjacent to the coil 6. Cooling channels 8 are arranged adjacent to the ferrite 7 and configured for providing a flow of coolant. The flowing coolant cools down the metal cover 9 in which the cooling channels are incorporated. Electric components 10 configured for charging the HV battery based on the AC are arranged adjacent to the metal cover for heat dissipation. The metal cover 9 separates the coil 6 and the ferrite 7 from the electric components 10. The coil 6 and ferrite 7 are embedded in a potting 11 that is protected by a coil cover 12. Potting 11 and coil cover 12 are usually made of plastic.

A disadvantage of the setup described with **Fig. 4** is the occurrence of relatively high Eddy current losses as the coil/ferrite 6/7 arrangement is quite close to the metal cover 9 and not isolated against it. Also, more specifically, the setup shown in **Fig. 4** causes quite complex deformations due to heat expansion, as the metal cover 9 is hooked into the magnetic assembly 11/12, which has, as a plastic part, a rather different thermal expansion coefficient than the metal cover 9. These relative movements may cause material fatigue in the long run. Furthermore, the complex geometry of the metal cover 9 is difficult and expensive to accomplish.

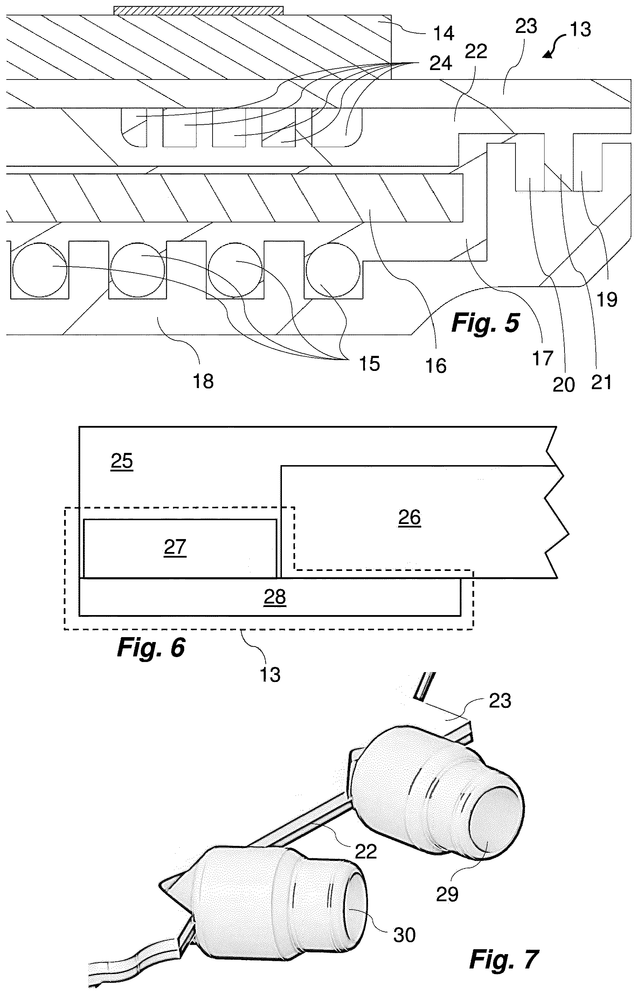

Despite the differences as will be explained with **Fig. 5****,** the wireless charger in accordance with the invention has the components as explained above with **Fig. 4****.** The one or more electric components 10 (or 14 in **Fig. 5**) involved may comprise at least one of a tuner, a rectifier, a DC/DC converter, and a EMC filter. Furthermore, the wireless charger 13 may comprise a wireless data receiver (not shown) that allows a control of the charging process, in particular control of the DC/DC converter. Another optional component is a sensor (not shown) that may be used to determine a positioning of the charger 13 relative to an electric power supplier (as shown in figures 1 and 2 with numeral 3) above which the vehicle has parked.

**Fig. 5** shows an exemplary embodiment of the inventive charger. The coil 15 and the ferrite 16 are embedded in the potting 17, which is embedded in the coil cover 18. The coil cover 18 has a recess 19 for receiving a lug 20 of the potting 17. The recess 19 is further configured to receive a lug 21 belonging to the electrically non-conductive part 22. The electrically non-conductive part 22 may be manufactured e.g. from plastic, in particular by injection molding. Advantages of this part 22 include: (a) it is directly in contact with the potting 20 which has a similar heat expansion coefficient, thus causing little to no relative movement between the two components due to thermal expansion; (b) it is lighter than parts known from prior art chargers; (c) it is easier and cheaper to manufacture; (d) it shields the metal cover 23 and the power electronic component(s) 14 from the oscillating magnetic fields arriving at the coil 15, thereby reducing eddy losses during charging; (e) it allows the metal cover 23 to have a flat surface where it abuts the electrically non-conductive part 22 so that during thermal expansions, a relative movement does not cause excessive tensions.

The metal cover 23 may be glued onto the electrically non-conductive part 22, wherein this adhesive bond can compensate said relative movement when the system is heating up or cooling down. The cooling channels 24 are formed by recesses in the electrically non-conductive part 22 that are closed by the abutting metal cover 23. The electrically non-conductive part 22, particularly made of plastic, has a relatively low thermal conductivity. However, since most of the heat (or at least: the highest heat density) occurs on side of the power electronics 14 and the heat generation in the magnetics area (15-18) is well distributed and not so critical, the low thermal conductivity of the electrically non-conductive part 22 is no drawback. The direct contact between the coolant flowing through the cooling channels and the metal cover 23 ensures that the heat is removed from the electrical part(s) 14 efficiently. Optional geometry machined into the metal cover 23, e.g. pins or fins immersing in the recesses, may further improve heat dissipation.

The advantage of having two separate parts, of which one is thermally highly conductive and the other is not, symbiotically forming the cooling channels further is that the metal cover can also be used for further purposes. In other words, the component used as the metal cover can be "lent" from a different part of the vehicle, such as the vehicle body or the housing of the HV battery.

**Fig. 6** schematically shows the latter example. In this embodiment, the battery housing 25 houses the HV battery 26 and power electronics 27 that are necessary to charge the HV battery 26 based on the AC created in the coil by wirelessly receiving an oscillating magnetic field from the transmitter of an external supplier. These power electronics 27 correspond to the electrical component(s) 14 to be cooled and as shown in figure 5. The area where the magnetics 28 are mounted onto the battery housing 25 corresponds to the metal cover 23 as shown in **Fig. 5****.** The magnetics 28 correspond to the coil 15, the ferrite 16, the potting 17, and the coil cover 18.

One advantage of the configuration displayed in **Fig. 6** is a reduced weight because at least one part can be omitted. A further benefit is that the wireless charger (or at least parts thereof) can be retrofitted onto vehicles that may not yet have such feature (given that the electronic components 27 are preinstalled). Also, the guidance of the coolant through a plastic part 22 may have the benefit that it can melt in case of a fire and thereby release the coolant to help extinguish the fire.

In a further embodiment, as shown in **Fig. 7****,** the wireless charger comprises a coolant inlet 29 and a coolant outlet 30 both being machined or formed into the electrically non-conductive part 22. If the injection molding technique is used for the production of the non-conductive part 22, the formation of the coolant inlet 29 and the coolant outlet 30 is very easy and cheap to achieve. The coolant pump (not shown) can be connected to the coolant inlet 29 and coolant outlet 30 and e.g. mounted next to the charger 13.

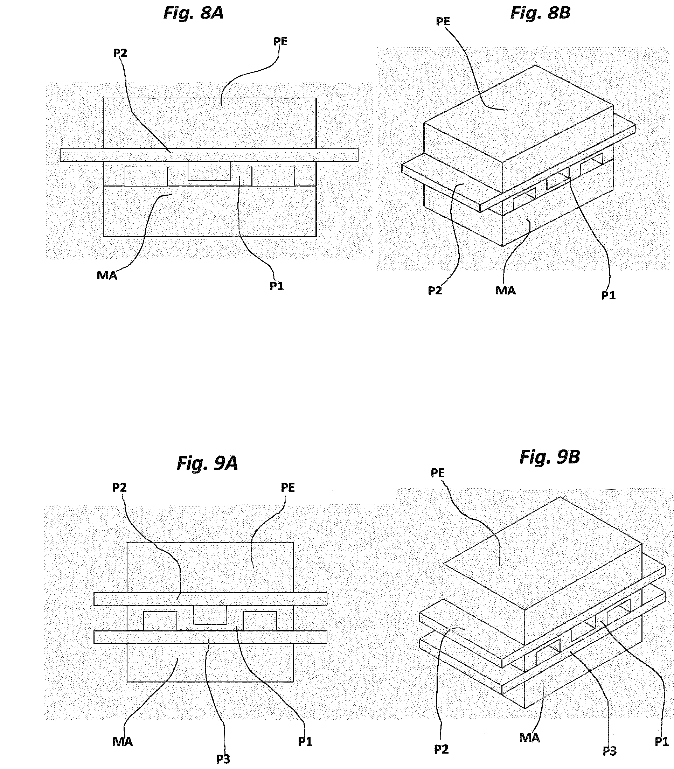

**Figs. 8A and 8B** schematically show another embodiment as a cross-section and as a perspective view, respectively.

The power transformer assembly 13 is configured for transforming electromagnetic power of an oscillating electromagnetic field into electric power of an electric current for charging an electric storage device or energizing an electric load. The power transformer assembly comprises a magnetic assembly MA for receiving the oscillating electromagnetic field and transforming it into an electric alternating current. The power transformer assembly also comprises an electronic assembly PE for receiving the electric alternating current AC and transforming it into the electric current for charging an electric storage device or energizing an electric load. In addition, the power transformer assembly comprises heat dissipation means P1, P2 for dissipating heat generated by the magnetic assembly MA and by the electronic assembly PE during their respective power transforming operation.
The heat dissipation means P1, P2 is arranged between the magnetic assembly MA and the electronic assembly PE and in thermal contact with the magnetic assembly MA and the electronic assembly PE. The heat dissipation means P1, P2 comprises a first part P1 in thermal contact with the magnetic assembly MA and a second part P2 in thermal contact with the electronic assembly PE.
The first part P1 comprises a first material and/or has a first structure adapted to dissipate heat flow form the magnetic assembly MA. The second part P2 comprises a second material different from the first material and/or has a second structure different from the first structure adapted to dissipate heat flow form the electronic assembly PE.
Preferably, the first part P1 is made from a polymer material which is easily manufactured by molding, for instance by injection molding.
Preferably, the second part P2 is made from a metal material.

**Figs. 9A and 9B** schematically show a further embodiment (fifth embodiment) as a cross-section and as a perspective view, respectively.

The power transformer assembly 13 shown in **Figs. 9A and 9B** differs from the power transformer assembly shown in **Figs. 8A and 8B** in that the heat dissipation means P1, P2, P3 comprises a third part P3 arranged between the first part P1 and the magnetic assembly MA.
Preferably, the first part P1 is made from a polymer material which is easily manufactured by molding, for instance by injection molding.
Preferably, the second part P2 is made from a metal material.
Preferably, the third part P3 is made from a metal material.

An exemplary power transformer assembly 13 or wireless charger 4,13 for charging a high-voltage (HV) battery 26 of a vehicle 2, comprises
a coil 15 configured for wirelessly receiving an oscillating magnetic field from an external transmitter, thereby creating an alternating current (AC);
a ferrite 16 arranged adjacent to the coil;
cooling channels 24 arranged adjacent to at least one of the ferrite and the coil, the cooling channels being configured for providing a flow of coolant;
electric and/ or electronic components 14 configured for charging the HV battery based on the AC;
a metal cover 23 separating the coil and the ferrite from the electric components, at least one of the electric components being arranged adjacent to the metal cover; and
an electrically non-conductive part 22 configured for forming the cooling channels at least in part and separating the coil and the ferrite from the metal cover.

The cooling channels 24 may be formed at least in part by recesses machined or formed into the electrically non-conductive part 22.

The cooling channels 24 may be formed by the metal cover 23 closing the recesses by abutting the electrically non-conductive part 22.

The cooling channels may be formed by a plate closing the recesses by abutting the electrically non-conductive part, the plate separating the electrically non-conductive part from the metal cover.

The cooling channels may be incorporated into the electrically non-conductive part.

The metal cover 23 may be at least a part of a housing 25 of the HV battery 26.

The metal cover may comprise a structure for enlarging the heat sink, the structure dipping into the cooling channels.

A coolant inlet 29 and a coolant outlet 30 may be provided, both coolant inlet and coolant outlet being machined or formed into the electrically non-conductive part 22.

The metal cover 23 may be glued onto the electrically non-conductive part 22.

The metal cover 23 may be flat at least in an area adjacent to the electrically non-conductive part 22.

The electrically non-conductive part 22 may be made of plastic.

The coil 15 and the ferrite 16 may be combined in one potting 17.

The wireless charger (4,13) according to claim 12, further comprising a coil cover (18) made of plastic, said potting (17) embedded in the coil cover, said coil cover configured to be joined with the electrically non-conductive part (22).

The transformer assembly 13 or wireless charger 4,13 may comprise sealing lips bordering or encompassing the cooling channels.

The metal cover may be made of aluminium and configured for shielding the vehicle from the oscillating magnetic field.

Although the invention is illustrated above, partly with reference to some preferred embodiments, it must be understood that numerous modifications and combinations of different features of the embodiments can be made. All of these modifications lie within the scope of the appended claims.

## Claims

1. A power transformer assembly (13) for transforming electromagnetic power of an oscillating electromagnetic field into electric power of an electric current for charging an electric storage device or energizing an electric load, the power transformer assembly comprising:
a magnetic assembly (MA) for receiving the oscillating electromagnetic field and transforming it into an electric alternating current (AC);
an electronic assembly (PE) for receiving the electric alternating current (AC) and transforming it into the electric current, wherein
the power transformer assembly (13) comprises heat dissipation means (P1, P2; P1, P2, P3) for dissipating heat generated by the magnetic assembly (MA) and by the electronic assembly (PE) during their respective power transforming operation, wherein:
a) the heat dissipation means (P1, P2; P1, P2, P3) is arranged between the magnetic assembly (MA) and the electronic assembly (PE) and in thermal contact with the magnetic assembly (MA) and the electronic assembly (PE);
b) the heat dissipation means comprises: a first part (P1) in thermal contact with the magnetic assembly (MA) and a second part (P2) in thermal contact with the electronic assembly (PE);
c) the first part (P1) comprises a first material and has a first structure adapted to dissipate heat flow from the magnetic assembly (MA);
d) the second part (P2) comprises a second material different from the first material and has a second structure different from the first structure adapted to dissipate heat flow from the electronic assembly (PE),
wherein the second material of the second part (P2) is a metal or a metal alloy and the first material of the first part (P1) is a polymer or a polymer blend and the first part (P1) comprises a portion defining ducts for a heat transfer fluid.

2. A power transformer assembly according to claim 1, wherein the first part (P1) comprises a first material having a first thermal conductivity and the second part (P2) comprises a second material having a second thermal conductivity, said second thermal conductivity being greater than said first thermal conductivity.

3. A power transformer assembly according to claim 1 or 2, wherein a thermal conductivity of the second material is greater than 100 W/(m-K).

4. A power transformer assembly according to any one of claims 1 to 3, wherein the first part (P1) with said duct-defining portion is made by molding a moldable material in a mold.

5. A power transformer assembly according to any one of claims 1 to 3, wherein the first part (P1) with said duct-defining portion is made by sintering a sinterable material within a mold.

6. A power transformer assembly according to any one of claims 4 to 5, wherein the first part (P1) with said duct-defining portion is made by cross-linking a cross-linkable material within said mold.

7. A power transformer assembly according to any one of claims 1 to 6, wherein the first part (P1) with said duct-defining portion is made additively in a layer-by-layer fashion.

8. A power transformer assembly according to any one of claims 1 to 7, wherein the first part (P1) comprises a polymer matrix having particles dispersed therein, said particles being selected from the group comprising metal particles and graphite particles.

9. A power transformer assembly according to any of the preceding claims, wherein the second part (P2) comprises a solid metal material.

10. A power transformer assembly according to any of the preceding claims, wherein the second part (P2) comprises a porous metal material.

11. A power transformer assembly according to any of the preceding claims, wherein the second part (P2) comprises a metal layer.

12. A power transformer assembly according to any of the preceding claims, wherein the heat dissipation means (P1, P2; P1, P2, P3) comprises a third part (P3) arranged between the first part (P1) and the magnetic assembly (MA), in particular wherein one of the following is the case:
• the third part (P3) comprises a solid metal material;
• the third part (P3) comprises a porous metal material;
• the third part (P3) comprises a metal layer.

13. A power transformer assembly according to claim 12, wherein a three-part sandwich arrangement (P1, P2, P3) composed of the first part (P1), second part (P2) and the third part (P3) is arranged between the magnetic assembly (MA) and the electronic assembly (PE) and in thermal contact with each of them.

14. A power transformer assembly according to any one of claims 1 to 13, wherein the ducts (24) for the heat transfer fluid defined by the material of the first part (P1) comprise a plurality of flow obstacles extending across the ducts (24), wherein one or more of the following is the case:
• at least some of the flow obstacles are formed integrally with the first part (P1);
• at least some of the flow obstacles are formed integrally with the second part (P2);
• at least some of the flow obstacles are formed integrally or monolithically with the third part (P3);

15. A power transformer assembly according to any one of claims 1 to 14, wherein the first part (P1) comprises functional portions (29, 30) formed integrally with the duct-defining-material of the first part (P1), wherein said functional portions comprise at least one of a heat transfer fluid inlet (29), a heat transfer fluid outlet (30), a snorkel or breathing element and interface formations.

## Patentansprüche

1. Eine Leistungstransformatoranordnung (13) zum Umwandeln elektromagnetischer Energie eines oszillierenden elektromagnetischen Feldes in elektrische Energie in Form eines elektrischen Stroms zum Laden einer elektrischen Speichervorrichtung oder zum Versorgen einer elektrischen Last, wobei die Leistungstransformatoranordnung:
eine magnetische Anordnung (MA) zum Empfangen des oszillierenden elektromagnetischen Feldes und zum Umwandeln desselben in einen elektrischen Wechselstrom (AC);
eine elektronische Anordnung (PE) zum Empfangen des elektrischen Wechselstroms (AC) und zum Umwandeln desselben in den elektrischen Strom umfasst, wobei
die Leistungstransformatoranordnung (13) Wärmeableitungsmittel (P1, P2; P1, P2, P3) umfasst, um Wärme abzuleiten, die von der magnetischen Anordnung (MA) und von der elektronischen Anordnung (PE) während ihres jeweiligen Leistungsumwandlungsvorgangs erzeugt wird, wobei:
a) die Wärmeableitungsmittel (P1, P2; P1, P2, P3) zwischen der magnetischen Anordnung (MA) und der elektronischen Anordnung (PE) angeordnet sind und in thermischem Kontakt mit der magnetischen Anordnung (MA) und der elektronischen Anordnung (PE) stehen;
b) die Wärmeableitungsmittel einen ersten Teil (P1), der in thermischem Kontakt mit der magnetischen Anordnung (MA) steht, und einen zweiten Teil (P2), der in thermischem Kontakt mit der elektronischen Anordnung (PE) steht, umfasst;
c) der erste Teil (P1) ein erstes Material umfasst und eine erste Struktur aufweist, die dazu ausgelegt ist, einen Wärmefluss von der magnetischen Anordnung (MA) abzuleiten;
d) der zweite Teil (P2) umfasst ein zweites Material, das sich vom ersten Material unterscheidet, und weist eine zweite Struktur auf, die sich von der ersten Struktur unterscheidet, und die dazu ausgelegt ist, einen Wärmefluss von der elektronischen Anordnung (PE) abzuleiten,
wobei das zweite Material des zweiten Teils (P2) ein Metall oder eine Metalllegierung ist und das erste Material des ersten Teils (P1) ein Polymer oder ein Polymergemisch ist und der erste Teil (P1) einen Abschnitt umfasst, der Kanäle für ein Wärmeübertragungsfluid definiert.

2. Leistungstransformatoranordnung nach Anspruch 1, wobei der erste Teil (P1) ein erstes Material mit einer ersten Wärmeleitfähigkeit umfasst und der zweite Teil (P2) ein zweites Material mit einer zweiten Wärmeleitfähigkeit umfasst, wobei die zweite Wärmeleitfähigkeit grösser ist als die erste Wärmeleitfähigkeit.

3. Leistungstransformatoranordnung nach Anspruch 1 oder 2, wobei die Wärmeleitfähigkeit des zweiten Materials grösser als 100 W/(m-K) ist.

4. Leistungstransformatoranordnung nach einem der Ansprüche 1 bis 3, wobei der erste Teil (P1) mit dem den Kanal bildenden Abschnitt durch Formen eines formbaren Materials in einer Form hergestellt ist.

5. Leistungstransformatoranordnung nach einem der Ansprüche 1 bis 3, wobei der erste Teil (P1) mit dem den Kanal bildenden Abschnitt durch Sintern eines sinterfähigen Materials in einer Form hergestellt ist.

6. Leistungstransformatoranordnung nach einem der Ansprüche 4 bis 5, wobei der erste Teil (P1) mit dem Kanal bildenden Abschnitt durch Vernetzen eines vernetzbaren Materials in der Form hergestellt wird.

7. Leistungstransformatoranordnung nach einem der Ansprüche 1 bis 6, wobei der erste Teil (P1) mit dem Kanal bildenden Abschnitt additiv schichtweise hergestellt wird.

8. Leistungstransformatoranordnung nach einem der Ansprüche 1 bis 7, wobei der erste Teil (P1) eine Polymermatrix umfasst, in der Partikel dispergiert sind, wobei die Partikel aus der Gruppe ausgewählt sind, die Metallpartikel und Graphitpartikel umfasst.

9. Leistungstransformatoranordnung nach einem der vorangehenden Ansprüchen, wobei der zweite Teil (P2) ein festes Metallmaterial umfasst.

10. Leistungstransformatoranordnung nach einem der vorangehenden Ansprüchen, wobei der zweite Teil (P2) ein poröses Metallmaterial umfasst.

11. Leistungstransformatoranordnung nach einem der vorstehenden Ansprüche, wobei der zweite Teil (P2) eine Metallschicht umfasst.

12. Leistungstransformatoranordnung nach einem der vorstehenden Ansprüche, wobei die Wärmeableitvorrichtung (P1, P2; P1, P2, P3) einen dritten Teil (P3) umfasst, der zwischen dem ersten Teil (P1) und der magnetischen Anordnung (MA) angeordnet ist, wobei insbesondere einer der folgenden Fälle vorliegt:
• der dritte Teil (P3) umfasst ein festes Metallmaterial;
• der dritte Teil (P3) umfasst ein poröses Metallmaterial;
• der dritte Teil (P3) umfasst eine Metallschicht.

13. Leistungstransformatoranordnung nach Anspruch 12, wobei eine dreiteilige Sandwichanordnung (P1, P2, P3), zusammengesetzt aus dem ersten Teil (P1), dem zweiten Teil (P2) und dem dritten Teil (P3), zwischen der magnetischen Anordnung (MA) und der elektronischen Anordnung (PE) angeordnet ist und mit jeder von ihnen in thermischem Kontakt steht.

14. Leistungstransformatoranordnung nach einem der Ansprüche 1 bis 13, wobei die durch das Material des ersten Teils (P1) definierten Kanäle (24) für das Wärmeübertragungsfluid eine Vielzahl von Strömungshindernissen umfassen, die sich über die Kanäle (24) erstrecken, wobei einer oder mehrere der folgenden Fälle zutrifft:
• mindestens einige der Strömungshindernisse sind integral mit dem ersten Teil (P1) ausgebildet;
• mindestens einige der Strömungshindernisse sind integral mit dem zweiten Teil (P2) ausgebildet;
• mindestens einige der Strömungshindernisse sind integral oder monolithisch mit dem dritten Teil (P3) ausgebildet.

15. Leistungstransformatoranordnung nach einem der Ansprüche 1 bis 14, wobei der erste Teil (P1) Funktionsabschnitte (29, 30) umfasst, die integral mit dem die Kanäle definierenden Material des ersten Teils (P1) ausgebildet sind, wobei die Funktionsabschnitte mindestens eines der folgenden Elemente umfassen: einen Einlass (29) für ein Wärmeübertragungsfluid, einen Auslass (30) für das Wärmeübertragungsfluid, einen Schnorchel oder ein Belüftungselement und Schnittstellenformationen.

## Revendications

1. Ensemble de transformateur de puissance (13) destiné à transformer l'énergie électromagnétique d'un champ électromagnétique oscillant en énergie électrique sous forme de courant électrique afin de charger un dispositif de stockage d'énergie ou d'alimenter une charge électrique, l'ensemble de transformateur de puissance comprenant:
un ensemble magnétique (MA) destiné à recevoir le champ électromagnétique oscillant et à le transformer en un courant électrique alternatif (CA);
un ensemble électronique (PE) destiné à recevoir le courant électrique alternatif (CA) et à le transformer en courant électrique, dans lequel
l'ensemble de transformateur de puissance (13) comprend des moyens de dissipation thermique (P1, P2; P1, P2, P3) destinés à dissiper la chaleur générée par l'ensemble magnétique (MA) et par l'ensemble électronique (PE) au cours de leur opération respective de transformation de puissance, dans lequel:
a) les moyens de dissipation thermique (P1, P2 ; P1, P2, P3) sont disposés entre l'ensemble magnétique (MA) et l'ensemble électronique (PE) et en contact thermique avec l'ensemble magnétique (MA) et l'ensemble électronique (PE);
b) les moyens de dissipation thermique comprennent: une première partie (P1) en contact thermique avec l'ensemble magnétique (MA) et une deuxième partie (P2) en contact thermique avec l'ensemble électronique (PE);
c) la première partie (P1) comprend un premier matériau et présente une première structure adaptée pour dissiper le flux thermique provenant de l'ensemble magnétique (MA);
d) la deuxième partie (P2) comprend un deuxième matériau différent du premier matériau et présente une deuxième structure différente de la première structure, adaptée pour dissiper le flux thermique provenant de l'ensemble électronique (PE),
dans lequel le deuxième matériau de la deuxième partie (P2) est un métal ou un alliage métallique et le premier matériau de la première partie (P1) est un polymère ou un mélange de polymères et la première partie (P1) comprend une portion définissant des conduits pour un fluide caloporteur.

2. Ensemble de transformateur de puissance selon la revendication 1, dans lequel la première partie (P1) comprend un premier matériau ayant une première conductivité thermique et la deuxième partie (P2) comprend un deuxième matériau ayant une deuxième conductivité thermique, ladite deuxième conductivité thermique étant supérieure à ladite première conductivité thermique.

3. Ensemble de transformateur de puissance selon la revendication 1 ou 2, dans lequel la conductivité thermique du deuxième matériau est supérieure à 100 W/(m-K).

4. Ensemble de transformateur de puissance selon l'une quelconque des revendications 1 à 3, dans lequel la première partie (P1) comportant ladite partie définissant un conduit est fabriquée par moulage d'un matériau moulable dans un moule.

5. Ensemble de transformateur de puissance selon l'une quelconque des revendications 1 à 3, dans lequel la première partie (P1) comportant ladite partie définissant le conduit est fabriquée par frittage d'un matériau frittable à l'intérieur d'un moule.

6. Ensemble de transformateur de puissance selon l'une quelconque des revendications 4 à 5, dans lequel la première partie (P1) comportant ladite partie définissant un conduit est fabriquée par réticulation d'un matériau réticulable à l'intérieur dudit moule.

7. Ensemble de transformateur de puissance selon l'une quelconque des revendications 1 à 6, dans lequel la première partie (P1) comportant ladite partie définissant un conduit est fabriquée par ajout de matière, couche par couche.

8. Ensemble de transformateur de puissance selon l'une quelconque des revendications 1 à 7, dans lequel la première partie (P1) comprend une matrice polymère dans laquelle sont dispersées des particules, lesdites particules étant choisies parmi le groupe comprenant des particules métalliques et des particules de graphite.

9. Ensemble de transformateur de puissance selon l'une quelconque des revendications précédentes, dans lequel la deuxième partie (P2) comprend un matériau métallique solide.

10. Ensemble de transformateur de puissance selon l'une quelconque des revendications précédentes, dans lequel la deuxième partie (P2) comprend un matériau métallique poreux.

11. Ensemble de transformateur de puissance selon l'une quelconque des revendications précédentes, dans lequel la deuxième partie (P2) comprend une couche métallique.

12. Ensemble de transformateur de puissance selon l'une quelconque des revendications précédentes, dans lequel le moyen de dissipation thermique (P1, P2; P1, P2, P3) comprend une troisième partie (P3) disposée entre la première partie (P1) et l'ensemble magnétique (MA), en particulier dans lequel l'une des situations suivantes se présente:
• la troisième partie (P3) comprend un matériau métallique solide;
• la troisième partie (P3) comprend un matériau métallique poreux;
• la troisième partie (P3) comprend une couche métallique.

13. Ensemble de transformateur de puissance selon la revendication 12, dans lequel un agencement en sandwich en trois parties (P1, P2, P3) composé de la première partie (P1), de la deuxième partie (P2) et de la troisième partie (P3) est disposé entre l'ensemble magnétique (MA) et l'ensemble électronique (PE) et en contact thermique avec chacun d'eux.

14. Ensemble de transformateur de puissance selon l'une quelconque des revendications 1 à 13, dans lequel les conduits (24) pour le fluide de transfert de chaleur définis par le matériau de la première partie (P1) comprennent une pluralité d'obstacles à l'écoulement s'étendant à travers les conduits (24), dans lequel une ou plusieurs des situations suivantes se présentent:
• au moins certains des obstacles à l'écoulement sont formés d'un seul tenant avec la première partie (P1);
• au moins certains des obstacles à l'écoulement sont formés d'un seul tenant avec la deuxième partie (P2);
• au moins certains des obstacles à l'écoulement sont formés d'un seul tenant ou de manière monolithique avec la troisième partie (P3).

15. Ensemble de transformateur de puissance selon l'une quelconque des revendications 1 à 14, dans lequel la première partie (P1) comprend des parties fonctionnelles (29, 30) formées d'un seul tenant avec le matériau définissant les conduits de la première partie (P1), lesdites parties fonctionnelles comprenant au moins l'un parmi une entrée de fluide caloporteur (29), une sortie de fluide caloporteur (30), un snorkel ou un élément de respiration et des formations d'interface.
